(19) Europäisches Patentamt
European Patent Office
Office européen des brevets

(11) **EP 1 136 441 B1**

(12) **EUROPÄISCHE PATENTSCHRIFT**

(45) Veröffentlichungstag und Bekanntmachung des Hinweises auf die Patenterteilung:
**21.01.2009 Patentblatt 2009/04**

(51) Int Cl.:
**B01J 23/89** (2006.01)     **B01J 37/02** (2006.01)
**C01B 3/16** (2006.01)

(21) Anmeldenummer: **01106781.6**

(22) Anmeldetag: **17.03.2001**

(54) **Verfahren zur katalytischen Umsetzung von Kohlenmonoxid in einem Wasserstoff enthaltenden Gasgemisch**

Method for the catalytic conversion of carbon monoxide in a hydrogen containing gas mixture

Méthode de conversion catalytique du monoxyde de carbone d'un mélange gazeux contenant de l'hydrogène

(84) Benannte Vertragsstaaten:
**AT BE CH CY DE DK ES FI FR GB GR IE IT LI LU MC NL PT SE TR**

(30) Priorität: **21.03.2000 DE 10013895**

(43) Veröffentlichungstag der Anmeldung:
**26.09.2001 Patentblatt 2001/39**

(73) Patentinhaber: **Umicore AG & Co. KG**
**63457 Hanau-Wolfgang (DE)**

(72) Erfinder:
• **Baumann, Frank Dr.**
**63755 Alzenau (DE)**
• **Wieland, Stefan Dr.**
**63069 Offenbach (DE)**

(74) Vertreter: **Stellbrink, Axel et al**
**Vossius & Partner**
**Siebertstrasse 4**
**81675 München (DE)**

(56) Entgegenhaltungen:
EP-A- 1 161 991          WO-A-00/66486
WO-A-98/08771          WO-A-99/35082
US-A- 4 283 308          US-A- 4 708 946

• ERTL G., KNÖZINGER H., WEITKAMP J.: "Handbook of Heterogeneous Catalysis, Volume 4" 1997 , VCH VERLAGSGESELLSCHAFT , WEINHEIM, GERMANY XP002200710 * Seite 1831 - Seite 1843 * * Absatz [3.3.3.3] * * Absatz [3.3.4.3] *
• WHITTINGTON B. J. ET AL.: "Vehicle exhaust catalysis: 1. The relative importance of catalytic oxidation, steam reforming and water-gas shift reactions" CATALYSIS TODAY, Bd. 26, 1995, Seiten 41-45, XP002198479
• F. BOCCIZZI ET AL.: "FTIR Study of the Low-Temperature Water-Gas Shift Reaction on Au/Fe2O3 and Au/TiO2 Catalysts" JOURNAL OF CATALYSIS, Bd. 188, 1999, Seiten 176-185, XP002199864
• D. C. GRENOBLE ET AL.: "The Chemistry of the Water Gas Shift Reaction 1. Kinetics over Supported Metal Catalysts" JOURNAL OF CATALYSIS, Bd. 67, Nr. 1, 1981, Seiten 90-102, XP001071022

Bemerkungen:
Die Akte enthält technische Angaben, die nach dem Eingang der Anmeldung eingereicht wurden und die nicht in dieser Patentschrift enthalten sind.

EP 1 136 441 B1

**Beschreibung**

Die Erfindung betrifft ein Verfahren zur katalytischen Umsetzung von Kohlenmonoxid in einem Wasserstoff und weitere, oxidierbare Bestandteile enthaltenden Gasgemisch mit Wasser zu Kohlendioxid und Wasserstoff.

Die Umsetzung von Kohlenmonoxid mit Wasser zu Kohlendioxid und Wasserstoff in Gegenwart von Katalysatoren ist ein bekanntes Verfahren zur Herstellung von Wasserstoff reichen Gasmischungen, dem folgende exotherme Reaktion zugrunde liegt:

$$CO + H_2O \leftrightarrow H_2 + CO_2 \ \Delta H > O \qquad (1)$$

Dabei kann es zu den folgenden Nebenreaktionen kommen:

$$CO\text{-Methanisierung: } CO + 3\ H_2 \leftrightarrow CH_4 + H_2O\ \Delta H > O \qquad (2)$$

und

$$CO_2\text{-Methanisierung: } CO_2 + 4\ H_2 \leftrightarrow CH_4 + 2H_2O\ \Delta H > O \qquad (3)$$

Die Reaktion gemäß Reaktionsgleichung (1) wird im folgenden als Kohlenmonoxid-Konvertierung oder CO-Konvertierung bezeichnet. Im angelsächsischen Sprachgebrauch wird hierfür häufig der Begriff "water-gas-shift reaction" verwendet.

Die Herstellung von Wasserstoffreichen Gasmischungen aus Kohlenwasserstoffen, beziehungsweise Alkoholen, durch Dampfreformierung, partielle Oxidation oder autotherme Reformierung ist ein bekannter Prozeß. Diese Gasmischungen (Reformate) enthalten abhängig vom eingesetztem Verfahren 1 bis 40 Vol. -% Kohlenmonoxid.

Für den Einsatz des Reformates als Brennstoff in Brennstoffzellen ist es notwendig, das in ihm enthaltene Kohlenmonoxid so weit wie möglich zu vermindern, um die Vergiftung des Platin enthaltenden Anodenkatalysators der Brennstoffzellen bei der Oxidation des Wasserstoffs zu vermeiden. Darüber hinaus führt die Umsetzung des Kohlenmonoxids gemäß Reaktionsgleichung (1) zu einer Erhöhung des Wasserstoffgehaltes des Reformates und damit zu einer Verbesserung des Wirkungsgrades des Gesamtprozesses.

Aus Platz- und Gewichtsgründen werden für die Anwendung in Kraftfahrzeugen Katalysatoren für die Umsetzung des Kohlenmonoxids mit einer sehr hohen Aktivität und Selektivität benötigt. Die damit erzielbaren hohen Raum-Zeit-Ausbeuten gestatten es, das Volumen der benötigten Reaktoren klein zu halten.

Bekannte Katalysatoren für die Umsetzung von Kohlenmonoxid wurden überwiegend für stationäre, industrielle Anwendungen entwickelt. Die Schwerpunkte lagen auf der Produktion von reinem Wasserstoff, Ammoniak und anderen großtechnischen Produkten, die auf der Verwendung von Synthesegasmischungen ($CO/H_2$) basieren. Katalysatoren für die Umsetzung von Kohlenmonoxid gemäß Reaktionsgleichung (1) werden im folgenden auch als Shift-Katalysatoren bezeichnet.

Es handelt sich bei diesen bekannten Katalysatoren um Unedelmetalle enthaltende Vollkatalysatoren. Sie werden in zweistufigen Verfahren eingesetzt. In der ersten Verfahrensstufe wird bei Temperaturen zwischen 360 und 450˚ C eine sogenannte Hochtemperatur-CO-Konvertierung (high temperature water-gas-shift, HTS) an Fe/Cr-Katalysatoren durchgeführt. In der anschließenden zweiten Stufe wird bei Temperaturen zwischen 200 und 270˚ C eine Tieftemperatur-CO-Konvertierung (low temperature water-gas-shift, LTS) an Cu/ZnO-Katalysatoren vorgenommen. Hinter der Tieftemperatur-Verfahrensstufe werden entsprechend dem thermischen Gleichgewicht Kohlenmonoxid-Konzentrationen von weniger als 1 Vol.-% erhalten.

Die konventionellen Katalysatoren für die Umsetzung von Kohlenmonoxid besitzen entscheidende Nachteile:

Die beschriebene, zweistufige Verfahrensführung ist wegen der Eigenschaften dieser Katalysatoren notwendig. Während Cu/ZnO-haltige Katalysatoren oberhalb 270˚ C durch Rekristallisation, beziehungsweise Sinterung, des Kupfers deaktiviert werden, können die im Hochtemperaturbereich verwendeten Fe/Cr-haltigen Katalysatoren wegen mangelnder Aktivität nicht bei niedrigen Temperaturen eingesetzt werden. Wird der vorgegebene Temperaturbereich der Hochtemperatur-Katalysatoren überschritten, können Methanisierungsreaktionen (Reaktionsgleichungen (2) und (3)) eintreten, die die Selektivität des Hochtemperatur-Katalysators verringern und dadurch den Gesamtwirkungsgrad des Wasserstoff-Erzeugungssystems herabsetzen.

Sowohl bei den bekannten Hochtemperatur- als auch bei den Tieftemperatur-Katalysatoren handelt es sich um Schüttgutkatalysatoren, bei denen das Katalysatormaterial zu Pellets oder anderen Formkörpern verpresst ist. Sie bestehen demgemäß vollständig aus katalytisch aktiver Masse und werden auch als Vollkatalysatoren bezeichnet. Sie weisen in der Regel eine hohe Schüttdichte auf.

In den bekannten, industriellen Verfahren zur Umsetzung von Kohlenmonoxid an Katalysatoren nach Reaktionsgleichung (1) wird mit Raumgeschwindigkeiten des Gasgemisches zwischen 300 und 3000 $h^{-1}$ gearbeitet. Diese geringen Raumgeschwindigkeiten sind für eine Anwendung in Kraftfahrzeugen nicht ausreichend.

Hohe Schüttdichten und geringe Raumgeschwindigkeiten führen zu niedrigen, spezifischen Konvertierungsraten $R_{CO}$ für Kohlenmonoxid, worunter im Rahmen dieser Erfindung die umgesetzte Stoffmenge an Kohlenmonoxid $n_{CO}$ pro Masse $m_{Kat}$ des Katalysators und Reaktionsdauer At verstanden wird. Die Masse des Katalysators wird hierbei in Gramm, die Reaktionsdauer in Sekunden und die Stoffmenge in Mol angegeben:

$$ R_{CO} = \frac{n_{CO}}{m_{Kat} \cdot \Delta t} \quad \left[ \frac{mol}{g \cdot s} \right] \qquad (4) $$

Die bekannten Cu/ZnO- und Fe/Cr-Katalysatoren müssen vor ihrem Einsatz durch Reduktion aktiviert werden. Die aktivierten Katalysatoren sind gegenüber Sauerstoff empfindlich. Bei Kontakt mit Luftsauerstoff werden sie wieder in exothermer Reaktion oxidiert und deaktiviert.

Im Vergleich zu den soeben beschriebenen, industriellen Hochtemperatur- und Tieftemperatur-Katalysatoren auf Fe/Cr- bzw. Cu/ZnO-Basis sind edelmetallhaltige Katalysatoren für diese Anwendungen bisher hauptsächlich aus der wissenschaftlichen Literatur bekannt.

D.C. Grenoble et al. beschreiben in "The Chemistry and Catalysis of the Water Gas Shift Reaction. 1. The Kinetics over Supported Metal Catalysts", J. Catal. 67 (1980) 90-102, Pulver-Katalysatoren, die als aktive Komponente Cu, Re, Co, Ru, Ni, Pt, Os, Au, Fe, Pd, Rh oder Ir enthalten und die auf Aluminiumoxid ($Al_2O_3$) als Trägermaterial abgeschieden sind. Die kinetischen Untersuchungen ergaben für Kohlenmonoxid eine Reaktionsordnung von ca. 0,2 , für das eingesetzte Wasser eine Reaktionsordnung von ca. 0.5.

In "Methanisation and Water-Gas Shift Reactions over Pt/CeO2", J. Catal. 96 (1985) 285-287, beobachten Steinberg et al. schlechte Selektivitäten im Hinblick auf den Umsatz von Kohlenmonoxid nach Reaktionsgleichung (1). Das Produktgasgemisch enthält dementsprechend hohe Anteile von Methan.

In "Water-gas shift conversion using a feed with a low steam to carbon monoxide ratio and containing sulphur", Catal. Today 30 (1996) 107-118, untersuchen J. Ross et al. neben Fe/Cr-, Cu/ZnO- und Co/Cr-Katalysatoren einen Pt/ZrO$_2$-Katalysator Dieser Katalysator zeigt bei 320˚C einen Kohlenmonoxid-Umsatz von 50%. Das Pt/ZrO$_2$-System zeigt in der Reihe der untersuchten Verbindungen die höchste Toleranz gegenüber schwefelhaltigen Verbindungen, Der Katalysator zeigt bei 300˚C einen Umsatz von 25% und bei 350˚C einen Umsatz von 70%. Dies entspricht einer spezifischen Konvertierungsrate für Kohlenmonoxid von $R_{CO}$ (300˚C) = $7{,}00 \cdot 10^{-6}$ mol/($g_{cat}$ s)bzw. $R_{CO}$ (350˚C) = $1{,}95 \cdot 10^{-5}$ mol/($g_{cat}$ ·s).

Die FR 2567866 A beschreibt einen Kupfer und/oder Palladium enthaltenden Katalysator auf einem Träger aus Spinell $ZnAl_2O_4$, der dadurch gewonnen wird, das der zu Partikeln mit Durchmessern zwischen 0,4 und 0,6 mm verformte Spinell mit Lösungen von Kupfer und/oder Palladium imprägniert und calciniert wird. Bei Drücken von 40 bar und einer Temperatur von 250˚C wird bei einem sehr hohen Wasserüberschuß ($H_2O/CO$ = 10) mit diesem Katalysator ein Umsatz von 86% erreicht.

Die in den wissenschaftlichen Veröffentlichungen untersuchten Pulverkatalysatoren sind für eine technische Anwendung nicht geeignet.

Die bekannten Vollkatalysatoren in Form von Tabletten, Kugeln oder unregelmäßig geformten Partikeln werden als sogenannte Schüttgut-Katalysatoren eingesetzt. Mit solchen Katalysatoren werden nur unbefriedigende Raum-Zeit-Ausbeuten erhalten. Außerdem sind die erzielbaren, spezifischen Konvertierungsraten mit diesen Katalysatoren gering.

Es war daher Aufgabe der vorliegenden Erfindung, ein Verfahren für die Umsetzung von Kohlenmonoxid in einem Wasserstoff enthaltenden Gasgemisch anzugeben, welches unter den mobilen Einsatzbedingungen in Kraftfahrzeugen mit ihren sich schnell ändernden Leistungsanforderungen eine hohe, spezifische Konvertierungsrate für Kohlenmonoxid bei guter Selektivität ermöglicht, eine hohe Temperaturbeständigkeit aufweist und unempfindlich gegenüber Sauerstoff im Eduktgasgemisch ist.

Diese Aufgabe wird durch ein Verfahren zur katalytischen Umsetzung von Kohlenmonoxid in einem Wasserstoff enthaltenden Gasgemisch mit Wasser zu Kohlendioxid und Wasserstoff (Kohlenmonoxid-Konvertierung) gelöst. Zur Umsetzung des Kohlenmonoxids wird das Gasgemisch über einen Shift-Katalysator geleitet, der eine Arbeitstempetatur für die Kohlenmonoxid-Konvertierung besitzt.

Der Shift-Katalysator ist in Form einer Beschichtung auf einen inerten Tragkörper aufgebracht. Er enthält Platin und/oder Palladium gemeinsam mit Eisen sowie Ceroxid auf einem feinteiligen Aluminiumoxid als Trägermaterial.

Das vorgeschlagene Verfahren ist speziell für den mobilen Einsatz in mit Brennstoffzellen betriebenen Kraftfahrzeugen konzipiert, um das durch Dampfreförmierung, partielle Oxidation oder autotherme Reformierung gewonnene, Wasserstoff reiche Gasgemisch (im folgenden auch als Reformatgas bezeichnet) in allen Betriebzuständen des Kraftfahrzeuges effektiv von Kohlenmonoxid zu reinigen. Das Gasgemisch kann abhängig von seiner Herstellung bis zu 40 Vol.-% Kohlenmonoxid enthalten.

Der mobile Einsatz des Verfahrens stellt hohe Anforderungen an seine Effektivität und Dynamik. Während des Betriebs des Kraftfahrzeugs werden die Katalysatoren mit sehr unterschiedlichen Raumgeschwindigkeiten belastet. Sie variieren zwischen einer niedrigen. Raumgeschwindigkeit im Leerlauf des Kraftfahrzeugs und 100000 h$^{-1}$ bei Volllast.

Das vorgeschlagene Verfahren ermöglicht eine hohe Effektivität, das heißt eine hohe Raum-Zeit-Ausbeute durch Aufbringen des Katalysators in Form einer Beschichtung auf einen inerten Tragkörper. Ein solcher Katalysator wird im folgenden auch als Beschichtungskatalysator bezeichnet. Als Tragkörper eignen sich die aus der Autoabgasreinigung bekannten monolithischen Wabenkörper aus Keramik oder Metall mit Zelldichten (Anzahl der Strömungskanäle pro Querschnittsfläche) von mehr als 10 cm$^{-2}$. Aber auch Metallbleche, Wärmetauscherplatten, offenzellige, keramische oder metallische Schaumkörper und je nach Erfordernis unregelmäßig geformte Bauteile können als Tragkörper eingesetzt werden. Die Dicke der Beschichtung kann je nach Anwendungsfall zwischen 10 und 100 $\mu$m variieren.

Ein Tragkörper wird im Rahmen dieser Erfindung als inert bezeichnet, wenn das Material des Tragkörpers nicht oder nur unwesentlich an der katalytischen Umsetzung teilnimmt. In der Regel handelt es sich dabei um Körper mit geringer spezifischer Oberfläche und geringer Porosität.

Um eine möglichst feine Verteilung der katalytisch aktiven Komponenten auf dem Trägermaterial zu ermöglichen, sollte das Trägermaterial wenigstens eine spezifische Oberfläche (BET-Oberfläche, gemessen nach DIN 66132) von mehr als 10 m$^2$/g aufweisen.

Der Edelmetall-Katalysator weist eine Shift-Aktivität auf, das heißt er ist in der Lage, bei Vorliegen entsprechender Reaktionsbedingungen (Temperatur, Gaszusammensetzung) Kohlenmonoxid gemäß Reaktionsgleichung (1) mit Wasser zu Kohlendioxid und Wasserstoff umsetzen. Er wird im folgenden deshalb auch als Edelmetall-Shift-Katalysator bezeichnet. Seine Shift-Aktivität und Selektivität wird durch den Zusatz der katalytisch aktiven Komponenten, beziehungsweise Promotoren, verbessert. Hierzu gehören Elemente der Seltenerdmetalle, insbesondere Cer sowie die Unedelmetalle der Nebengruppen des periodischen Systems der Elemente, besonders Eisen.

Die Shift-Aktivität und Selektivität kann darüber hinaus auch durch Dotieren des Trägermaterials mit redoxaktiven Oxiden der Metalle Cer, Zirkon, Titan, Vanadium, Mangan und Eisen in einer Menge von 1 bis 50 Gew.-%, bezogen auf das Gesamtgewicht des Trägermaterials, erhöht werden.

Die Verwendung des Shift-Katalysators auf der Basis von Edelmetallen für das Verfahren hat auch den Vorteil, dass dieser Katalysator nicht durch Kontakt mit Sauerstoff deaktiviert wird. Deshalb werden im Kraftfahrzeug keine aufwendigen Maßnahmen benötigt, um den Katalysator vor Kontakt mit Luft zu schützen.

Erfindungsgemäß wird das beschriebene Katalysatormaterial nicht zu Vollkatalysatoren verarbeitet, sondern in Form einer Beschichtung auf inerte Tragkörper aufgebracht. Dadurch werden die Nachteile von Vollkatalysatoren im vorliegenden Verfahren vermieden, die darin bestehen, dass die katalytisch aktiven Zentren im Innern der Vollkatalysatoren für die Reaktanden schlecht zugänglich sind. Die schlechte Zugänglichkeit verhundert die spezifische Konvertierungsrate für Kohlenmonoxid und damit die erzielbare Raum-Zeit-Ausbeute. Das hat entsprechend negative Auswirkungen auf das Volumen des benötigten Reaktors. Die durch den Fahrbetrieb des Kraftfahrzeugs hervorgerufenen Erschütterungen führen außerdem zu einem ungewollten Abrieb der Vollkatalysatoren, der die Strömungswege in der Katalysator-Schüttung verstopft und damit den Druckab fall im Reaktor ständig erhöht.

Das Verfahren arbeitet bei Raumgeschwindigkeiten des Gasgemisches von einer Leerlauf-Raumgeschwindigkeit bis zu einem Wert von 100000 h$^{-1}$ und bei einem Druck zwischen Atmosphärendruck und 10 bar, wobei sich die Raumgeschwindigkeit auf das Volumen des mit dem Katalysator beschichteten Tragkörpers bezieht. Das Verfahren kann sowohl für die Niedertemperatur-CO-Konvertierung als auch für die Hochtemperatur-CO-Konvertierung eingesetzt werden.

Für die Niedertemperatur-CO-Konvertierung wird ein Edelmetall-Shift-Katalysator ist einer Arbeitsteinpetatur zwischen 180 und 300˚ C eingesetzt. Die niedrige Arbeitstemperatur wird durch eine relativ hohe Beladung des Katalysators mit den katalytisch aktiven Edelmetallen erreicht. Bei der Niedertemperatur-CO-Konvertierung enthält das Reformatgas gewöhnlich 2 bis 15 Vol.-% Kohlenmonoxid und besitzt eine vom Reformierungsprozess herrührende Eingangstemperatur zwischen 100 und 250˚ C.

Für die Hochtemperatur-CO-Konvertierung wird ein Edelmetall-Shift-Katalysator mit einer Arbeitstemperatur zwischen 280 und 550˚ C eingesetzt. Bei der Hochtemperatur-CO-Konvertierung enthält das Reformatgas gewöhnlich 2 bis 40 Vol.-% Kohlenmonoxid und besitzt eine vom Reformierungsprozess herrührende Einsangstempetatur zwischen 300 und 600˚ C.

Das Verfahren erlaubt auch die Hintereinanderschaltung einer Hochtemperatur-Konvertierungsstufe und einer Niedertemperatur-Konvertierungsstufe. Das Gasgemisch verlässt in diesem Fall die Hochtemperaturstufe mit einer Temperatur, die der Arbeitstemperatur des Katalysators der Hochtemperaturstufe entspricht und muss daher vor dem Kontakt mit dem Katalysator der Niedertemperaturstufe auf dessen Arbeitstemperatur abgekühlt werden.

Für die Herstellung eines für das Verfahren geeigneten Beschichtungskatalysators gibt es verschiedene Möglichkeiten, von denen hier einige erläutert werden.

Zur Herstellung eines erfindungsgemäßen Shift-Katalysators auf einem Tragkörper kann das Trägermaterial für die katalytisch aktiven Komponenten in einer wässrigen Lösung von löslichen Edelmetallverbindungen und weiteren löslichen Verbindungen von Unedelmetallen der Nebengruppen suspendiert werden. Anschließend wird die saure Suspension bei erhöhter Temperatur mit einer Base, wie zum Beispiel Natriumcarbonat, neutralisiert und dann bei gleichbleibender Temperatur mit einem wässrigen Reduktionsmittel (Formaldehyd, Hydrazin) reduziert, filtriert, gewaschen, getrocknet, bei Temperaturen zwischen 300 und 550° C in oxidierender Atmosphäre calciniert und anschließend bei Temperaturen zwischen 300 und 600° C reduziert. Das Katalysatormaterial wird zur Herstellung einer Beschichtungssuspension erneut in Wasser suspendiert. Mit dieser Suspension wird der Tragkörper beschichtet. Hierfür können die aus der Autoabgaskatalyse bekannten Verfahren zur Beschichtung von Tragkörpern eingesetzt werden. Zur Fertigstellung des Beschichtungskatalysators wird die Beschichtung getrocknet; bei Temperaturen zwischen 300 und 600° C calciniert und bei Temperaturen zwischen 300 und 600°C in einem wasserstoffhaltigen Gas reduziert.

Alternativ zu der beschriebenen Methode wird der Tragkörper zunächst nur mit dem Trägermaterial beschichtet, wobei das Trägermaterial Seltenerdoxide und Oxide von Unedelmetallen der Nebengruppen enthalten kann. Die Beschichtung auf dem Tragkörper wird anschließend mit einer Lösung aus mindestens einer löslichen Edelmetallverbindung, löslichen Verbindungen der Seltenen Erden und der Unedelmetalle der Nebengruppen imprägniert. Zur Fertigstellung des Beschichtungskatalysators wird der beschichte Tragkörper getrocknet, bei Temperaturen zwischen 300 und 600° C calciniert und bei Temperaturen zwischen 300 und 600° C in einem wasserstoffhaltigen Gas reduziert.

Eine weitere Variante zur Herstellung eines erfindungsgemäßen Beschichtungskatalysators besteht darin, dass zunächst eine Suspension aus dem Trägermaterial, den lösliche Verbindungen der Edelmetalle und gegebenenfalls den lösliche Verbindungen der Unedelmetalle der Nebengruppen und der Seltenen Erden hergestellt wird. Die gelösten Komponenten der Suspension werden dann durch Zugabe eines basischen Fällungsmittels, wie zum Beispiel Natriumhydroxid, auf dem suspendierten Trägermaterial ausgefällt. Die so hergestellte Suspension wird direkt zur Beschichtung der Tragkörper eingesetzt. Zur Fertigstellung des Beschichtungskatalysators wird der beschichtete Tragkörper getrocknet, bei Temperaturen zwischen 300 und 600° C calciniert und bei Temperaturen zwischen 300 und 600° C in einem wasserstoffhaltigen Gas reduziert.

Die Erfindung wird an Hand der folgenden Beispiele näher erläutert.

**Beispiel 1:**

Ein Edelmetall-Shift-Katalysator (Katalysator A) wurde wie folgt hergestellt:

Ein keramischer Wabenkörper mit 93 Zellen pro Quadratzentimeter und einem Volumen von 0,041 1 wurde durch Tauchen in eine wäßrige Suspension von $\gamma$-Aluminiumoxid (spezifische Oberfläche: 140 m$^2$/g) und zweistündiges Calcinieren bei 600° C mit 7,25 g $\gamma$-Aluminiumoxid beschichtet. Nach der Calcinierung wurde der beschichtete Wabenkörper mit einer Lösung aus $Ce(NO_3)_2 \cdot 6 H_2O$ in Wasser imprägniert und anschließend für zwei Stunden bei 500° C calciniert. Der calcinierte Formkörper wurde dann mit einer Lösung von $Pt(NO_3)_2$, $Pd(NO_3)_2$ und $Fe(NO_3)_3$ imprägniert.

Die katalytisch aktive Beschichtung des so hergestellten Katalysators hatte ein Gesamtgewicht von 5,16 g, entsprechend 126 g pro Liter Volumen des Wabenkörpers. Sie enthielt 1,2 Gew.-% Pt, 1,2 Gew.-% Pd, 2,4 Gew.-% Fe, 35,7 Gew.-% $CeO_2$ und 59,5 Gew.-% $Al_2O_3$.

Der Katalysator wurde unter den Bedingungen einer Hochtemperatur-Konvertierung bei Belastung mit einem synthetischen Reformat geprüft. Es wurde seine $CO_2$-Selektivität $S_{CO2}$, der CO-Umsatz, sowie die spezifische Konvertierungsrate $R_{CO}$ gemäß Gleichung (4) gemessen. Für die Hochtemperatur-Konvertierung wurde folgende Gaszusammensetzung verwendet: 27,0 Vol.-% $H_2$, 9,0 Vol.-% CO, 9,0 Vol.-% $CO_2$, 18,0 Vol.-% $H_2O$, 37,0 Vol.-% $N_2$. Die Katalysatoren wurden bei einer Raumgeschwindigkeit GHSV = 10000 h$^{-1}$ und einem Druck von 2 bar absolut geprüft.

Die $CO_2$-Selektivität $S_{CO2}$ der Umsetzung von Kohlenmonoxid wurde mit Hilfe der Partialdrücke des gebildeten Kohlendioxids $p_{CO2}$ und des Methans $p_{CH4}$ berechnet als

$$S_{CO_2} = \frac{p_{CO_2}}{p_{CO_2} + p_{CH_4}} \qquad (5)$$

**Tabelle 1:** Hochtemperatur-CO-Konvertierung an Katalysator A.

| T [°C] | $S_{CO2}$ [%] | CO-Umsatz [%] | $R_{CO}$ $\left[\dfrac{mol}{g_{kat} \cdot s}\right]$ |
|---|---|---|---|
| 300 | 100 | 27 | $3,0 \cdot 10^{-5}$ |
| 350 | 100 | 35 | $4,0 \cdot 10^{-5}$ |
| 400 | 100 | 45 | $4,8 \cdot 10^{-5}$ |

**Vergleichsbeispiel 1:**

Ein kommerzieller Fe/Cr-Katalysator (Katalysator B; Tabletten 5x5 mm) wurde unter den gleichen Bedingungen wie Katalysator A geprüft.

**Tabelle 2:** Hochtemperatur-CO-Konvertierung an Katalysator B.

| T [°C] | $S_{CO2}$ [%] | CO-Umsatz [%] | $R_{CO}$ $\left[\dfrac{mol}{g_{kat} \cdot s}\right]$ |
|---|---|---|---|
| 300 | 100 | 30 | $2,2 \cdot 10^{6}$ |
| 350 | 100 | 37 | $2,7 \cdot 10^{-6}$ |
| 400 | 100 | 45 | $3,3 \cdot 10^{-6}$ |

Wie Tabelle 1 und 2 zeigen, weisen beide Katalysatoren vergleichbare CO-Umsätze auf. Der erfindungsgemäße Katalysator A zeigt jedoch aufgrund höherer Aktivität eine zehnfach höhere, spezifischen Konvertierungsrate $R_{CO}$ im Vergleich zum Katalysator B.

**Patentansprüche**

1. Verfahren, umfassend die folgenden Schritte:

   (i) katalytische Umsetzung von Kohlenmonoxid und Wasser in einem Wasserstoff enthaltenden Gasgemisch mit Wasser zu Kohlendioxid und Wasserstoff (Kohlenmonoxid-Konvertierung) durch Leiten des Gasgemisches über einen Shift-Katalysator, der eine Arbeitstemperatur für die Kohlenmonoxid-Konvertierung besitzt und der Platin und/oder Palladium gemeinsam mit Eisen sowie Ceroxid auf einem feinteiligen Aluminiumoxid als Trägermaterial enthält, das in Form einer Beschichtung auf einen inerten Tragkörper aufgebracht ist; und
   (ii) Leiten des erhaltenen Gasgemisches als Brennstoff in einer Brennstoffzelle.

2. Verfahren nach Anspruch 1, wobei das oxidische Trägermaterial mit redoxaktiven Oxiden der Metalle Cer, Zirkon, Titan, Vanadium, Mangan und Eisen in einer Menge von 1 bis 50 Gew.-%, bezogen auf das Gesamtgewicht des Trägermaterials, dotiert ist.

3. Verfahren nach Anspruch 1, wobei als inerter Tragkörper monolithische Wabenkörper aus Keramik oder Metall, offenzellige, keramische oder metallische Schaumkörper, Metallbleche, Wärmetauscherplatten oder unregelmässig geformte Bauteile eingesetzt werden.

4. Verfahren nach Anspruch 3, wobei in Schritt (i) das Gasgemisch mit einer Raumgeschwindigkeit zwischen einer Leerlauf-Raumgeschwindigkeit und 100000 $h^{-1}$ und bei einem Druck zwischen Atmosphärendruck und 10 bar über den Katalysator geleitet wird, wobei sich die Raumgeschwindigkeit auf das Volumen des mit dem Katalysator beschichteten Tragkörpers bezieht.

**5.** Verfahren nach Anspruch 4, wobei die Arbeitstemperatur des Shift-Katalysators zwischen 180 und 300 ˚C liegt.

**6.** Verfahren nach Anspruch 5, wobei das Gasgemisch 2 bis 15 Vol.-% Kohlenmonoxid enthält.

**7.** Verfahren nach Anspruch 4, wobei die Arbeitstemperatur des Shift-Katalysators zwischen 280 und 550 ˚C liegt.

**8.** Verfahren nach Anspruch 4, wobei dem Shift-Katalysator mit einer Arbeitstemperatur zwischen 280 und 550 ˚C ein weiterer Shift-Katalysator mit einer Arbeitstemperatur zwischen 180 und 300 ˚C nachgeschaltet ist und das Gasgemisch vor dem Kontakt mit dem weiteren Katalysator auf dessen Arbeitstemperatur abgekühlt wird.

**9.** Verfahren nach Anspruch 7 oder 8, wobei das Gasgemisch 2 bis 40 Vol.-% Kohlenmonoxid enthält.

## Claims

**1.** A method comprising the following steps:

(i) catalytically converting carbon monoxide and water in a hydrogen-containing gas mixture with water into carbon dioxide and hydrogen (carbon monoxide conversion) by passing the gas mixture over a shift catalyst having an operating temperature for carbon monoxide conversion and containing platinum and/or palladium together with iron as well as cerium oxide on finely divided aluminium oxide as a support applied onto an inert carrier in the form of a coating; and
(ii) introducing the gas mixture obtained into a fuel cell as a fuel.

**2.** The method according to claim 1, wherein the oxidic support is doped with redox-active oxides of the metals cerium, zirconium, titanium, vanadium, manganese and iron in an amount of from 1 to 50% by weight, based on the total weight of the support.

**3.** The method according to claim 1, wherein monolithic honeycomb elements of ceramic or metal, open-cell, ceramic or metallic foam elements, metal sheets, heat exchanger plates or irregularly shaped elements are used as the inert carrier.

**4.** The method according to claim 3, wherein in step (i) the gas mixture is passed over the catalyst at a space velocity between idling space velocity and 100,000 h$^{-1}$, and at a pressure between atmospheric pressure and 10 bar, wherein the space velocity refers to the volume of the carrier coated with the catalyst.

**5.** The method according to claim 4, wherein the operating temperature of the shift catalyst is between 180 and 300˚C.

**6.** The method according to claim 5, wherein the gas mixture contains from 2 to 15% by volume of carbon monoxide.

**7.** The method according to claim 4, wherein the operating temperature of the shift catalyst is between 280 and 550˚C.

**8.** The method according to claim 4, wherein an additional shift catalyst having an operating temperature between 180 and 300˚C is disposed downstream of the shift catalyst having an operating temperature between 280 and 550˚C and wherein the gas mixture is cooled to the operating temperature of the additional catalyst before being brought into contact with it.

**9.** The method according to claim 7 or 8, wherein the gas mixture contains from 2 to 40% by volume of carbon monoxide.

## Revendications

**1.** Procédé présentant les étapes suivantes :

(i) réaction catalytique de monoxyde de carbone et d'eau, dans un mélange gazeux renfermant de l'hydrogène, avec de l'eau pour obtenir du dioxyde de carbone et de l'hydrogène (conversion du monoxyde de carbone) par transfert du mélange gazeux sur un catalyseur de déplacement qui possède une température de travail pour la conversion du monoxyde de carbone et qui renferme du platine et/ou du palladium en association avec du fer et de l'oxyde de cérium sur un oxyde d'aluminium finement divisé et faisant office de matériau support appliqué sous la forme d'un revêtement sur un corps porteur inerte, et

(ii) transfert du mélange gazeux obtenu en tant que carburant dans une cellule électrochimique.

**2.** Procédé selon la revendication 1,
selon lequel
le matériau support oxydé est dopé avec des oxydes ayant activité redox des métaux cérium, zirconium, titane, vanadium, manganèse et fer en quantité de 1 % à 50 % en poids par rapport au poids total du matériau support.

**3.** Procédé selon la revendication 1,
selon lequel
on met en oeuvre en tant que corps porteur inerte, un corps en nid d'abeilles monolithique en céramique ou en métal, un corps expansé à cellules ouvertes métallique ou céramique, des tôles métalliques, des plaques d'échangeur de chaleur ou des éléments de forme irrégulière.

**4.** Procédé selon la revendication 3,
selon lequel
lors de l'étape (i), on transfère le mélange gazeux sur le catalyseur avec une vitesse spatiale comprise entre la vitesse spatiale de marche à vide et 100 000 h$^{-1}$ et sous une pression comprise entre la pression atmosphérique et 10 bars, la vitesse spatiale se rapportant au volume du corps porteur recouvert de catalyseur.

**5.** Procédé selon la revendication 4,
selon lequel
la température de travail du catalyseur de déplacement est comprise entre 180˚C et 300˚C.

**6.** Procédé selon la revendication 5,
selon lequel
le mélange gazeux renferme de 2 % à 15 % en volume de monoxyde de carbone.

**7.** Procédé selon la revendication 4,
selon lequel
la température de travail du catalyseur de déplacement est comprise entre 280˚C et 550˚C.

**8.** Procédé selon la revendication 4,
selon lequel
un catalyseur de déplacement supplémentaire ayant une température de travail comprise entre 180˚C et 300˚C est monté en aval dudit catalyseur de déplacement ayant une température de travail comprise entre 280˚C et 550˚C, et avant son contact avec le catalyseur supplémentaire, le mélange gazeux est refroidi à la température de travail de celui-ci.

**9.** Procédé selon la revendication 7 ou 8,
selon lequel
le mélange gazeux renferme de 2 % à 40 % en volume de monoxyde de carbone.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2567866 A

**In der Beschreibung aufgeführte Nicht-Patentliteratur**

- **D.C. GRENOBLE et al.** The Chemistry and Catalysis of the Water Gas Shift Reaction. 1. The Kinetics over Supported Metal Catalysts. *J. Catal.,* 1980, vol. 67, 90-102
- Methanisation and Water-Gas Shift Reactions over Pt/CeO. *J. Catal.,* 1985, vol. 96, 285-287
- **J. ROSS.** Water-gas shift conversion using a feed with a low steam to carbon monoxide ratio and containing sulphur. *Catal. Today,* 1996, vol. 30, 107-118